(19) Europäisches Patentamt
European Patent Office
Office européen des brevets

(11) **EP 2 385 393 B1**

(12) **EUROPÄISCHE PATENTSCHRIFT**

(45) Veröffentlichungstag und Bekanntmachung des Hinweises auf die Patenterteilung:
**13.06.2018  Patentblatt 2018/24**

(51) Int Cl.:
***G01S 13/72*** *(2006.01)*

(21) Anmeldenummer: **11002914.7**

(22) Anmeldetag: **07.04.2011**

(54) **Verfahren und Vorrichtung zur Verfolgung der Bewegungsbahn eines sich bewegenden Objekts sowie Computerprogramm und Datenträger**

Method and device for tracking the trajectory of a mobile object and computer program and data carrier

Procédé et dispositif de suivi de la bande de mouvement d'un objet en mouvement ainsi que programme informatique et support de données

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2010  DE 102010019147**

(43) Veröffentlichungstag der Anmeldung:
**09.11.2011  Patentblatt 2011/45**

(73) Patentinhaber: **MBDA Deutschland GmbH**
**86529 Schrobenhausen (DE)**

(72) Erfinder:
• **Schöttl, Alfred Dr.**
  **80809 München (DE)**
• **Kalender, Carolyn**
  **85254 Sulzemoos (DE)**

(74) Vertreter: **Isarpatent**
**Patent- und Rechtsanwälte Behnisch Barth Charles**
**Hassa Peckmann & Partner mbB**
**Friedrichstrasse 31**
**80801 München (DE)**

(56) Entgegenhaltungen:
**DE-A1- 10 062 120      US-A- 5 537 511**
**US-A1- 2009 048 811**

• **ZHANG H ET AL: "Grid Based Solution of Zakai Equation with Adaptive Local Refinement for Bearings-only Tracking", AEROSPACE CONFERENCE, 2008 IEEE, IEEE, PISCATAWAY, NJ, USA, 1. März 2008 (2008-03-01), Seiten 1-8, XP031256306, ISBN: 978-1-4244-1487-1**

**Beschreibung**

TECHNISCHES GEBIET

Die vorliegende Erfindung betrifft ein Verfahren und eine Vorrichtung zur Verfolgung der Bewegungsbahn eines sich bewegenden Objekts. Sie betrifft weiterhin ein Computerprogramm, welches dieses Verfahren implementiert sowie einen Datenträger mit einem derartigen Computerprogramm.

STAND DER TECHNIK

Solche derartigen Verfahren, die allgemein auch als "Tracking"-Verfahren bezeichnet werden, sind allgemein bekannt und werden beispielsweise in der Literaturstelle Zhang, H.; Laneuville, D.: Grid Based Solution of Zakai Equation with Adaptive Local Refinement for Bearings-only Tracking, IEEE Aerospace Conference 2008, Seiten 1 bis 8 beschrieben. Solche bekannten Verfahren werden beispielsweise eingesetzt, um die Bewegungsbahn von Flugkörpern selbst dann mit verhältnismäßig großer Genauigkeit bestimmen und die Bewegung des Flugkörpers vorhersagen zu können, wenn nur wenige und möglicherweise fehlerbehaftete Ortungen des Flugkörpers vorliegen. Derartige Ortungen können beispielsweise mittels Radarmessungen von einer oder mehreren Messeinrichtungen durchgeführt werden.
Unter Verwendung aller bis zu einem gegenwärtigen Zeitpunkt verfügbaren Messdaten derartiger Ortungen des Objekts ist zunächst einmal die aktuelle Position des Objekts zu bestimmen. Dies soll möglichst in Echtzeit oder Quasi-Echtzeit erfolgen, da es zum Beispiel für die Bekämpfung eines anfliegenden Flugkörpers erforderlich ist, zumindest die aktuelle Position des Flugkörpers zu kennen und möglicherweise sogar die weitere Bewegungsbahn des Flugkörpers vorauszusagen.

Neben der Position des Objekts, zum Beispiel eines Flugkörpers, ist man in der Regel auch an anderen Zustandsgrößen, wie beispielsweise dem Geschwindigkeitsvektor oder Parametern von Manövermodellen, wie dem ballistischen Koeffizienten interessiert, denn ein anfliegender Flugkörper wird sich nicht entlang einer linearen Bewegungsbahn mit gleichmäßiger Geschwindigkeit bewegen, sondern ist in der Regel so gesteuert, dass er taktische Manöver fliegt.

Des Weiteren kann es auch erforderlich sein, Schätzungen der Zustandsgrößen (einschließlich der Positionsdaten) des Objekts für vergangene Zeitpunkte (sogenannte Glättung) oder für zukünftige Zeitpunkte (sogenannte Prädiktion) zu ermitteln. Auch kann es gewünscht sein, Messungen, die erst zu späteren Zeitpunkten, also nicht in Echtzeit, zur Verfügung stehen (sogenannte Latenzzeiten) verarbeiten zu können.

Würde das Objekt eine lineare Bewegung beschreiben, oder würden sich die Zustandsgrößen des Objekts in linearer Weise ändern, so wäre bei normal verteilter Anfangsverteilung und normal verteilten Messfehlern eine Berechnung mit relativ wenig Aufwand mittels Kalman-Filtern durchführbar. In der Praxis ist es jedoch so, dass sich die Zustände des Objekts in nichtlinearer Weise ändern. Ein Flugkörper kann beispielsweise in einem Täuschungsmanöver verzögern, beschleunigen oder abrupt die Richtung ändern, so dass dann eine Bahnbestimmung mit einer Kalman-Filterung nicht oder nur sehr ungenau möglich ist. Sind demnach, wie in der Praxis, die interessierenden Bewegungen und anderen Zustandsgrößen des sich bewegenden Objekts durch nichtlineare Gleichungen zu beschreiben, ist eine optimale Bestimmung des Schätzwerts in einer geschlossenen Form oftmals nicht möglich.

Das Problem lässt sich jetzt beschreiben in Form von stochastischen Differentialgleichungen für den im Allgemeinen mehrdimensionalen Systemzustandsvektor $X_t$ und die im Allgemeinen mehrdimensionale Messung $Y_t$,

$$dX_t = f(t, X_t)dt + \sigma(t, X_t)dW_t$$

$$dY_t = g(t, X_t)dt + \nu(t, X_t)dV_t$$

Dabei seien f, g, $\sigma$, $\nu$ geeignete Funktionen, und W und V zwei Brownsche Bewegungen, die das Rauschen des Systems beziehungsweise der Messung abbilden. $X_t$ beschreibt dabei den vollständigen Zustand der Bewegung zum Zeitpunkt t, enthält also zum Beispiel die Position und die Geschwindigkeit zum Zeitpunkt t.

Analog lässt sich das System auch diskret zu Zeitpunkten $t_k$ beschreiben

$$X_{k+1} = f(t_k, X_k) + \sigma(t_k, X_k)W_k$$

$$Y_{k+1} = g(t_k, X_k) + \nu(t_k, X_k)V_k$$

mit normalverteilten Zufallsvariablen $W_k$ und $V_k$.

Eine Reihe von Approximationsverfahren für nichtlineare Filterprobleme sind bekannt.

*Extended Kalmanfilter* und andere linearisierende Verfahren linearisieren die Systemgleichungen und lösen das linearisierte Problem. Je nach Grad der Nichtlinearitäten im System sind deutliche Ungenauigkeiten bis hin zur Divergenz des Filters unvermeidlich.

Sampling-Methoden wie *Partikelfilter* oder *Unscented Filter* betrachten das Verhalten des Systems für einige geeignete Zustandsvektoren x, die entweder zufällig oder systematisch gewählt werden. Da realistische Probleme zum Beispiel fünf- bis zehndimensionale Zustandsvektoren erfordern, führt die Verwendung einiger weniger Systemzustandsvektoren in höheren Dimensionen zu hohen Ungenauigkeiten.

Eine exakte Behandlung des Problems erfolgt zum Beispiel durch Betrachtung der bedingten Dichtefunktion

$$p_t(x) := \frac{\partial}{\partial x} P(X_t \leq x \,|\, Y_s, s \leq t) \,.$$

Dabei ist $P(X_t \leq x \,|\, Y_s, s \leq t)$ die Wahrscheinlichkeit, dass der unbekannte zufällige Zustandsvektor zum Zeitpunkt t einen Wert kleiner oder gleich x annimmt, bei gegebenen Messungen bis zum Zeitpunkt t.

Es ist bekannt, dass die bedingte Dichtefunktion $p_t$ die vollständige Information über die Bewegung des Objekts zur Zeit t enthält. Die optimale Schätzung $\hat{X}_t$ des Systemzustands (im Sinne der Minimierung der Fehlervarianz) ergibt sich zum Beispiel als bedingte Erwartung, also durch Integration der Dichtefunktion,

$$\hat{X}_t = \int x p_t(x) \, dx \,.$$

Die exakte Ermittlung dieser Dichtefunktion löst das Problem also exakt. Im kontinuierlichen Fall lässt sich zeigen, dass die Dichtefunktion die stochastische partielle Differentialgleichung

$$\partial p_t = \left[ -\sum_k \frac{\partial}{\partial x_k} \big( f_k(t,x) p_t(x) \big) + \frac{1}{2} \sum_{i,k} \frac{\partial^2}{\partial x_i \partial x_k} \big( b_{ik}(t,x) p_t(x) \big) \right] dt + \left[ g(t,x) p_t(x) - \pi_t \big( g(t,X_t) \big) p_t(x) \right] \frac{d\tilde{W}}{\upsilon(t,x)}$$

mit $b(t,x) := \sigma(t,x)\sigma(t,x)^T$ erfüllt. Dabei ist $\pi_t(g(t,X_t))$ die Schätzung der Größe $g(t,X_t)$ und $\tilde{W}$ der Innovationsprozess, Gleichungen dieser Art werden auch *Zakai-Gleichungen* genannt.

Die Komponente $-\sum_k \frac{\partial}{\partial x_k} \big( f_k(t,x) p_t(x) \big)$ bestimmt die "Verschiebung" der Dichtefunktion und wird *Advektionsterm* genannt, der Term $\frac{1}{2} \sum_{i,k} \frac{\partial^2}{\partial x_i \partial x_k} \big( b_{ik}(t,x) p_t(x) \big)$ bestimmt die "Aufweitung" der Dichtefunktion und heißt *Diffusionsterm.* Diese beiden Komponenten dienen der Vorhersage des Systemverhaltens ohne Verwendung von Messungen. Die zugehörige Gleichung

$$\partial p_t = \left[ -\sum_k \frac{\partial}{\partial x_k} \big( f_k(t,x) p_t(x) \big) + \frac{1}{2} \sum_{i,k} \frac{\partial^2}{\partial x_i \partial x_k} \big( b_{ik}(t,x) p_t(x) \big) \right] dt$$

heißt *Fokker-Planck-Gleichung.*

Der letzte Term der stochastischen partiellen Differentialgleichung (Mess-Term) beschreibt den Informationsgewinn durch die Verwendung von Messungen. Im diskreten Fall, also im Fall, dass nur zu diskreten Zeitpunkten Messungen vorliegen, entspricht dieser Teil der Gleichung der *Bayes'schen Formel.* Analoge Formeln existieren also auch im Diskreten (das heißt die Messung und/oder das System selbst wird nur zu diskreten Zeitpunkten betrachtet) sowie beim Prädiktions- beziehungsweise beim Glättungsproblem.

Zhang und Laneuville (Zhang, H.; Laneuville, D.: Grid Based Solution of Zakai Equation with Adaptive Local Refinement for Bearings-only Tracking. IEEE Aerospace Conference 2008, S.1-8) lösen eine Gleichung dieses Typs durch numerische Verfahren. Dazu wird die Funktion $p_t$ auf einem lokal verfeinerten regulären Gitter von Stützstellen dargestellt und die Gleichung diskretisiert. Auf diese Art konnten Probleme bis zu vier Dimensionen bearbeitet werden. Da der Aufwand mit der Anzahl der Dimensionen exponentiell ansteigt, ist eine Übertragung auf höhere Dimensionen nur schwer möglich.

In den letzten Jahren wurden als neuer Ansatz sogenannte "dünne Gitter" zur Interpolation von höherdimensionalen Funktionen von Zenger [Zenger, C.: Sparse Grids. In W. Hackbusch (Hrsg.): Parallel Algorithms for Partial Differential Equations. Braunschweig: Vieweg, 1991 (Notes on Numerical Fluid Mechanics 31), Seiten 241 bis 251] eingeführt. In der DE 100 62 120 A1 wird dieser Ansatz in der Finanzmathematik zur Bewertung von Finanzderivaten beschrieben. Diese Gitter benötigen im d-dimensionalen Raum $O(N(\log N)^{d-1})$ Punkte, also substanziell weniger als ein reguläres Gitter mit $O(N^d)$ Punkten.

DARSTELLUNG DER ERFINDUNG

Aufgabe der vorliegenden Erfindung ist es daher, ein gattungsgemäßes Verfahren so auszugestalten, dass es auch bei Berücksichtigung von einer Vielzahl von Parametern, also bei mehr als vierdimensionalen dimensionalen Problemstellungen, effizient, zum Beispiel in Echtzeit, durchführbar ist. Auch ist es Aufgabe der Erfindung, eine entsprechende Vorrichtung zur Verfolgung der Bewegungsbahn eines sich bewegenden Objekts anzugeben.

Die erste Aufgabe wird gelöst durch das Verfahren zur Verfolgung der Bewegungsbahn eines sich bewegenden Objekts mit den Merkmalen des Anspruchs 1.

Dieses erfindungsgemäße Verfahren weist die folgenden Schritte auf:

a) Bereitstellung von Daten von zumindest einer die Bewegung beeinflussenden, zu bestimmenden Zustandsgröße des sich bewegenden Objekts zu einem ersten Zeitpunkt;

b) Initialisierung der Wahrscheinlichkeitsdichte (p) der zumindest einen zu bestimmenden Zustandsgröße zum ersten Zeitpunkt;

c) Prädiktion der Wahrscheinlichkeitsdichte (p) der zumindest einen zu bestimmenden Zustandsgröße zu einem nach dem ersten Zeitpunkt gelegenen nächsten Zeitpunkt;

d) Überprüfen, ob Messdaten vorliegen, die zu einer Berechnung der Wahrscheinlichkeitsdichte (p) der zumindest einen zu bestimmenden Zustandsgröße herangezogen werden können, und,

d') falls derartige Messdaten vorliegen, Neuberechnung der Wahrscheinlichkeitsdichte (p) mit diesen Messdaten;

e) Berechnen der Vorhersagewerte der zu bestimmenden Zustandgröße(n) aus der Wahrscheinlichkeitsdichte (p);

f) Ausgabe der berechneten Vorhersagewerte an eine nachgeordnete Datenverarbeitungseinrichtung;

g) Wiederholen der Schritte c) bis f),

wobei erfindungsgemäß die Schritte

- der Initialisierung der Wahrscheinlichkeitsdichte [Schritt b)],
- der Prädiktion der Wahrscheinlichkeitsdichte [Schritt c)],
- der Neuberechnung der Wahrscheinlichkeitsdichte [Schritt d')] und
- der Berechnung der Vorhersagewerte [Schritt e)]

durch Diskretisierung der Wahrscheinlichkeitsdichte (p) auf dünnen Gittern durchgeführt werden.

VORTEILE

Die Grundidee der Erfindung besteht also darin, bei den Berechnungen zur Verfolgung der Bewegungsbahn die Diskretisierungen der Wahrscheinlichkeitsdichte jeweils auf dünnen Gittern durchzuführen, also beispielsweise die oben genannten stochastischen partiellen Differentialgleichungen auf dünnen Gittern zu lösen.

Mit diesem erfindungsgemäßen Verfahren können durch die geringere Komplexität der dünnen Gitter und damit der Berechnungen deutlich kürzere Rechenzeiten als für gewöhnliche Gitter, insbesondere für höhere Dimensionen, also für mehr Zustände des Objekts, erzielt werden. Dies war mit den bisher bekannten Verfahren zum Lösen der oben genannten Differentialgleichung nicht möglich.

Das erfindungsgemäße Verfahren und eine solch ein Verfahren implementierende Vorrichtung lassen sich für die eingangs geschilderten Fälle vorteilhaft einsetzen.

Weitere bevorzugte und vorteilhafte Ausgestaltungsmerkmale des erfindungsgemäßen Verfahrens sind Gegenstand der Unteransprüche 2 bis 10.

Von Vorteil ist es, wenn die dünnen Gitter dimensionsadaptiert sind. Dadurch kann eine individuelle Anpassung des dünnen Gitters an die jeweilige Dimension und die dort für eine optimale Berechnung erforderliche Auflösung realisiert werden.

Auch vorteilhaft ist es, wenn die dünnen Gitter lokal verfeinert sind. Das bedeutet, dass das dünne Gitter in einem Bereich, in dem eine hohe Auflösung erforderlich oder erwünscht ist, lokal kürzere Abstände zwischen den Gitterstellen in einer oder mehreren Dimension(en) aufweist. Dadurch kann die Rechenkapazität konzentriert für die Berechnungen in diesem Bereich gebündelt werden.

In einer bevorzugten Variante des erfindungsgemäßen Verfahrens wird die Diskretisierung der Wahrscheinlichkeitsdichten auf dünnen Gittern für die einzelnen Gitterstellen sequentiell durchgeführt. Dieses sequenzielle Vorgehen erlaubt eine systematische konsekutive Abarbeitung der Berechnungen.

Vorteilhaft ist es aber auch, wenn die Diskretisierung der Wahrscheinlichkeitsdichten auf dünnen Gittern für die einzelnen Gitterstellen parallel durchführt wird. Dadurch können bei geeigneter Rechnerarchitektur wesentlich kürzere Rechenzeiten erzielt werden. Das Verfahren wird dadurch deutlich schneller, ohne die Ergebnisqualität zu mindern, also ohne Genauigkeitsverluste, in Kauf nehmen zu müssen.

Eine andere vorteilhafte Ausführungsform des erfindungsgemäßen Verfahrens zeichnet sich dadurch aus, dass im Schritt b) vor der ersten Diskretisierung der Wahrscheinlichkeitsdichte Daten bereitgestellt werden, die die Anzahl der Gitterstellen und die Abstände zwischen den Gitterstellen für jede Dimension des dünnen Gitters definieren und so eine Dünngittereinheit bestimmen und dass ein zumindest eine Dünngittereinheit aufweisendes Dünngittergebiet definiert wird.

Dadurch kann noch vor Beginn des Initialisierungsschrittes ein an die jeweilige Problematik individuell in den Abmessungen (Anzahl und Lage der Dünngittereinheiten) angepasstes Dünngittergebiet aus einer oder mehreren in den Abmessungen (Anzahl der Gitterstellen pro Dimension und Abstand zwischen den jeweiligen Gitterstellen) individuell angepassten Dünngittereinheit(en) festgelegt werden, um das Verfahren noch besser an die individuelle Problematik der Verfolgung der Bewegungsbahn anzupassen.

Von Vorteil ist es auch, wenn vor Schritt c), vorzugsweise im Schritt b), die Definition einer von der Wahrscheinlichkeitsdichte abhängigen ersten Entscheidungsgröße erfolgt und wenn nach dem Schritt e) die folgenden Schritte durchgeführt werden:

e1) Überprüfen, ob die erste Entscheidungsgröße auf einer Dünngittereinheit unter einem vorgegebenen Schwellenwert liegt und

e2) falls dies der Fall ist, Entfernen der überprüften Dünngittereinheit aus dem Dünngittergebiet.

Diese Abwandlung des erfindungsgemäßen Verfahrens gestattet es, das für die Berechnungen erforderliche Dünngittergebiet klein und damit die Gesamtrechenzeit kurz zu halten, da die Berechnungen der Wahrscheinlichkeitsdichte nur auf lokal erforderlichen Dünngittereinheiten durchgeführt werden und bei Bedarf, also dann, wenn sich die Wahrscheinlichkeitsdichtefunktion aufgrund einer Zustandsänderung des Objekts verändert oder verlagert hat, das Dünngittergebiet um eine oder mehrere Dünngittereinheit(en) verkleinert werden kann.

Es ist auch von Vorteil, wenn vor Schritt c), vorzugsweise im Schritt b), die Definition einer von der Wahrscheinlichkeitsdichte abhängigen zweiten Entscheidungsgröße erfolgt und wenn nach dem Schritt e) beziehungsweise nach dem Schritt e2) die folgenden Schritte durchgeführt werden:

e3) Überprüfen, ob die zweite Entscheidungsgröße in einem vorgegebenen Abstand zu einem Rand des Dünngittergebiets über einem vorgegebenen Schwellenwert liegt und

e4) falls dies der Fall ist, Erweitern des Dünngittergebiets um zumindest eine Dünngittereinheit angrenzend an den betreffenden Rand des Dünngittergebiets.

Auch diese Abwandlung des erfindungsgemäßen Verfahrens gestattet es, das für die Berechnungen erforderliche Dünngittergebiet klein und damit die Gesamtrechenzeit kurz zu halten, da die Berechnungen nur auf lokal erforderlichen Dünngittereinheiten durchgeführt werden und bei Bedarf, also dann, wenn sich die Wahrscheinlichkeitsdichtefunktion aufgrund einer Zustandsänderung des Objekts verändert oder verlagert hat, das Dünngittergebiet um eine oder mehrere Dünngittereinheit(en) vergrößert werden kann.

Vorteilhaft ist bei den beiden vorgenannten Weiterbildungen des erfindungsgemäßen Verfahrens, wenn die Entscheidungsgröße das Verhältnis zwischen dem Integral unter dem im vorgegebenen Abstand zum Rand des Dünngittergebiets gelegenen Teils der Wahrscheinlichkeitsdichte zum Integral unter der gesamten Wahrscheinlichkeitsdichte ist. Alternativ kann beispielsweise aber auch ein Verhältnis der Höhe der Wahrscheinlichkeitsdichtefunktion an einem randnahen Ort des Dünngittergebiets zur absoluten oder lokalen Maximalhöhe der Wahrscheinlichkeitsdichte als Entscheidungsgröße herangezogen werden.

Vorzugsweise werden die im Schritt a) bereitgestellten Daten durch Messung oder durch Schätzung ermittelt.

Die Erfindung erstreckt sich auch auf Computerprogramme und Computerprogrammprodukte zur Verfolgung der Bewegungsbahn eines sich bewegenden Objekts, in denen das erfindungsgemäße Verfahren implementiert ist, sowie auf Datenträger, auf denen derartige Programme oder Programmprodukte gespeichert sind.

Auch Vorrichtungen zur Ortung und Verfolgung von bewegten Objekten (insbesondere von Flugkörpern), die das erfindungsgemäße Verfahren verwenden, sind von der Erfindung umfasst.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

KURZE BESCHREIBUNG DER ZEICHNUNGEN

Es zeigt:

Fig. 1 ein Beispiel eines zweidimensionalen dünnen Gitters;

Fig. 2 eine schematische Ablaufdarstellung des erfindungsgemäßen Verfahrens;

Fig. 3 ein Beispiel einer Kachelung von Dünngittereinheiten zu einem Dünngittergebiet;

Fig. 4a eine Darstellung eines tatsächlichen Ist-Zustands eines Azimuth-Sichtlinienwinkels und einer Extended-Kalman-Schätzung des Azimuth-Sichtlinienwinkels

Fig. 4b eine Darstellung eines tatsächlichen Ist-Zustands eines Azimuth-Sichtlinienwinkels und einer Dünngitter-Schätzung des Azimuth-Sichtlinienwinkels

DARSTELLUNG VON BEVORZUGTEN AUSFÜHRUNGSBEISPIELEN

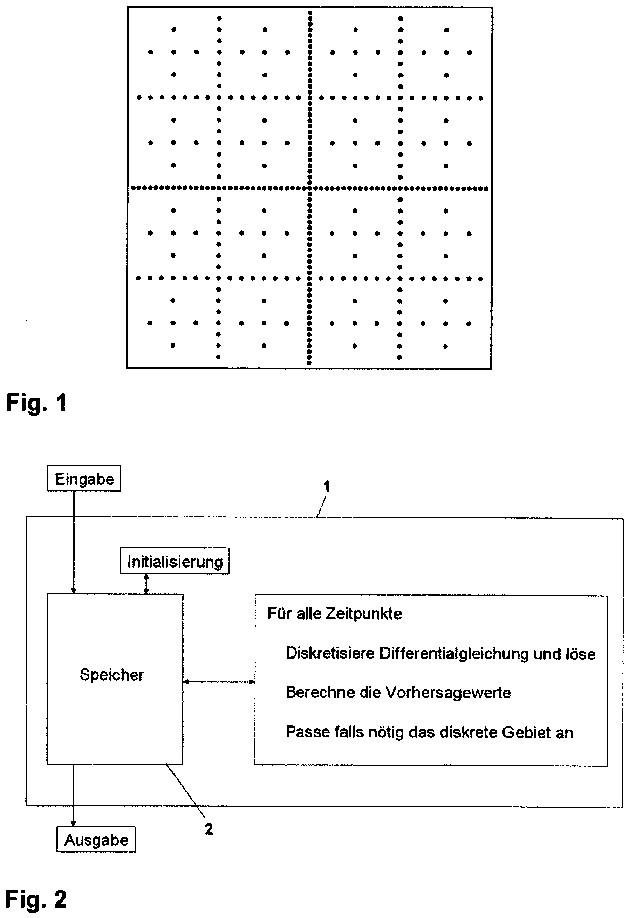

Fig. 1 zeigt ein Beispiel eines zweidimensionalen dünnen Gitters von symmetrischem Aufbau wie es bereits allgemein bekannt ist.

Fig. 2 ist eine schematische Ablaufdarstellung des erfindungsgemäßen Verfahrens, welches anhand dieser Figur nachstehend beschrieben wird. Das Bezugszeichen 1 bezeichnet dabei schematisch eine Rechnereinrichtung, auf welcher das erfindungsgemäße Verfahren in einer Software implementiert ist und abläuft.

Die Eingabedaten werden bereitgestellt und in einem Speicher 2 abgelegt und alle erforderlichen Initialisierungen werden durchgeführt. Die Vorhersage der Bewegung wird jeweils zu diskreten Zeitpunkten berechnet. Dazu wird in jedem Zeitschritt die Differentialgleichung auf den dünnen Gittern diskretisiert und die resultierende diskrete Gleichung gelöst. Ausgehend von der so berechneten Approximation der Dichtefunktion $p_t$ wird eine Vorhersage des aktuellen Bewegungszustands bestimmt. Zur Einsparung von Rechenzeit wird nicht der gesamte Zustandsraum, sondern es werden nur die in jedem Zeitschritt relevanten Bereiche des Zustandsraums diskretisiert. Diese Bereichswahl wird immer wieder an die aktuelle Approximation der Dichtefunktion angepasst.

Die Diskretisierung der Differentialgleichung erfolgt mittels finiter Differenzen oder einer anderen Diskretisierungsstrategie auf den dünnen Gittern. Dabei kann unter den verschiedenen Möglichkeiten, wie sie für Advektion und Diffusion bekannt sind, gewählt werden, zum Beispiel ein Finite-Differenzen-Upwind-Term für die im Advektionsteil auftretenden ersten Ableitungen und symmetrische finite Differenzen für die zweiten Ableitungen.

Die zeitliche Diskretisierung erfolgt zum Beispiel durch einen Euler-Schritt. Bei der Festlegung der Zeitschrittweite sind die für Advektions-Diffusionsgleichungen bekannten Stabilitätsbedingungen zu beachten.

Es ist auch möglich, aber nicht zwingend nötig, das Standard-Dünngitter im Zustandsraum zu modifizieren, zum Beispiel durch dimensionsabhängige Verfeinerung oder lokale, adaptive Verfeinerungsstrategien.

Die Radarmessdaten gehen entsprechend des Mess-Terms der Differentialgleichung an jeder der Dünngitterstellen (Gitterpunkte) in Form einer Gewichtung entsprechend der Bayes'schen Formel beziehungsweise ihres kontinuierlichen Analogons ein.

Die Vorhersage des Objektbewegungszustands wird zum Beispiel durch Berechnung der Erwartungswerte

$$\overline{X}_t = \int x p_t(x)\, dx$$

durch Integration erhalten. Die Berechnung erfolgt hierbei mit einem numerischen Integrationsverfahren auf den dünnen Gittern unter Verwendung der approximativ berechneten Dichtefunktion.

Der Advektionsterm der Differentialgleichung kann je nach konkreten Werten der $f_k$ dafür sorgen, dass sich die Lösung der Differentialgleichung über den gesamten Lösungszeitraum hinweg, über einen sehr großen Zustandsbereich erstreckt. Um dieses Problem rechenzeitsparend zu lösen, wird nicht in jedem Zeitschritt der gesamte mögliche Zustandsbereich diskretisiert, sondern nur das jeweils aktuell relevante Gebiet. Dies ist möglich, da die Dichtefunktionen in der Regel stark lokalisiert sind.

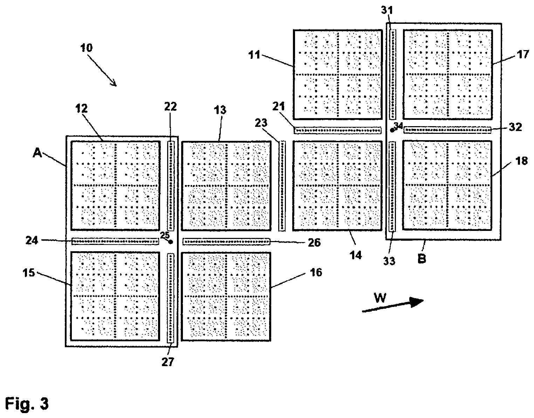

Das relevante Gebiet 10 wird dafür, wie in Fig. 3 gezeigt ist, durch einzelne dünne Gitter, sogenannte Dünngittereinheiten 11, 12, 13, 14, 15, 16, die über an ihren Rändern und Ecken entsprechend eingepasste Gitter-Ergänzungsstellen 21, 22, 23, 24, 25, 26, 27 zu einem Dünngittergebiet 10 verbunden sind, überdeckt. Wandert der Bereich der wesentlichen Information nun über die Zeit im Zustandsraum (also auf dem Dünngittergebiet 10), so werden dort, wo es erforderlich ist, weitere Dünngittereinheiten mittels entsprechend angepasster Gitter-Ergänzungsstellen angelegt, um diesen Bereich zu diskretisieren, und an den Stellen des Dünngittergebiets 10, an denen sich keine relevante Information mehr befindet, werden die überflüssigen Dünngittereinheiten entfernt. Die Gitter-Ergänzungsstellen, die null-, ein- oder mehrdimensional sind, bilden auf diese Weise Verbindungsstellen oder "Klebestellen" zwischen den Dünngittereinheiten. Das Dünngittergebiet 10 wird also kachelartig aus Dünngittereinheiten 11, 12, 13, 14, 15, 16 zusammengesetzt und bei Bedarf um einzelne Dünngittereinheiten ("Kacheln") erweitert oder verkleinert. Ein Beispiel einer solchen "Kachelung" ist für den zweidimensionalen Raum in Fig. 3 zu sehen.

In Fig. 3 ist eine solche Wanderung des Bereichs der wesentlichen Information durch den Pfeil W symbolisch dargestellt. Diese Wanderungsbewegung bedingt, dass im rechten oberen Bereich des Dünngittergebiets 10 zwei neue "Kacheln", nämlich die Dünngittergebiete 17 und 18 mittels der erforderlichen Gitter-Ergänzungsstellen 31, 32, 33, 34 als neues Teilgebiet B an das Dünngittergebiet 10 angesetzt werden.

Durch die Wanderungsbewegung W nimmt die Informationsdichte im unteren linken Teil des Dünngittergebiets 10 ab, sodass dieses Teilgebiet A mit den beiden Dünngittereinheiten 12 und 15 sowie den ihnen zugeordneten Gitter-Ergänzungsstellen 22, 24, 25 und 27 abgeschnitten, also aus dem Dünngittergebiet 10 entfernt werden kann.

Das Dünngittergebiet 10 wandert auf diese Weise mit dem Bereich der wesentlichen Information mit.

Die Begriffe Dünngittergebiet, Dünngittereinheit und Kachelung sind nicht auf zweidimensionale Erscheinungsformen begrenzt, sondern sind entsprechend der Anzahl der zu bestimmenden Zustandsgrößen mehrdimensional ausgeprägt.

Eine zusätzliche Rechenzeitreduzierung kann durch Parallelisierung der Verfahren erreicht werden. So ist bei einem reinen finite Differenzen Ansatz die Lösung des Advektions-Diffusionsteils der Differentialgleichung an den einzelnen Gitterstellen (Gitterpunkten) parallel möglich, genauso wie die Messaktualisierung entsprechend der Bayes'schen Formel. Unabhängig von der Diskretisierung können die unterschiedlichen, bei Einsatz einer Manöverwechseldetektion auftretenden Dichtefunktionen parallel verarbeitet werden.

Insgesamt können mit diesem Vorgehen durch die geringere Komplexität der dünnen Gitter deutlich kürzere Rechenzeiten als für gewöhnliche Gitter, insbesondere für höhere Dimensionen, also für eine Vielzahl zu bestimmender Zustandsgrößen, erzielt werden. Dies war mit den bisher bekannten Verfahren zum Lösen der eingangs angeführten Differentialgleichung nicht möglich.

Es wurde nach obiger Beschreibung eine Vorrichtung geschaffen, die für einen sechsdimensionalen Zustandsraum mit Hilfe der das erfindungsgemäße Verfahren implementierenden Dünngittertechnik die Vorhersage einer Flugkörperbewegung bei gegebenen Radarmessdaten durchführt. Simuliert wurde beispielsweise eine Objektbewegung von 20s. Die Simulationszeit betrug weniger als 10s.

Im Vergleich dazu sei auf den Stand der Technik verwiesen (Zhang, H.; Laneuville, D.: Approximation of Zakai equation by grid based method. Vortragsfolien, Workshop on Multi-target tracking, Bordeaux, France, 13.-15.Mai 2009, http://www.math.u-bordeaux.fr/~fcaron/Docs/mttworkshop-zhang.pdf) wo bei einem auf regulären, lokal verfeinerten Gittern basierenden herkömmlichen Vorgehen für eine Objektbewegung über 800s mit lediglich 4 Zuständen eine Simulationszeit von 3h angegeben wird.

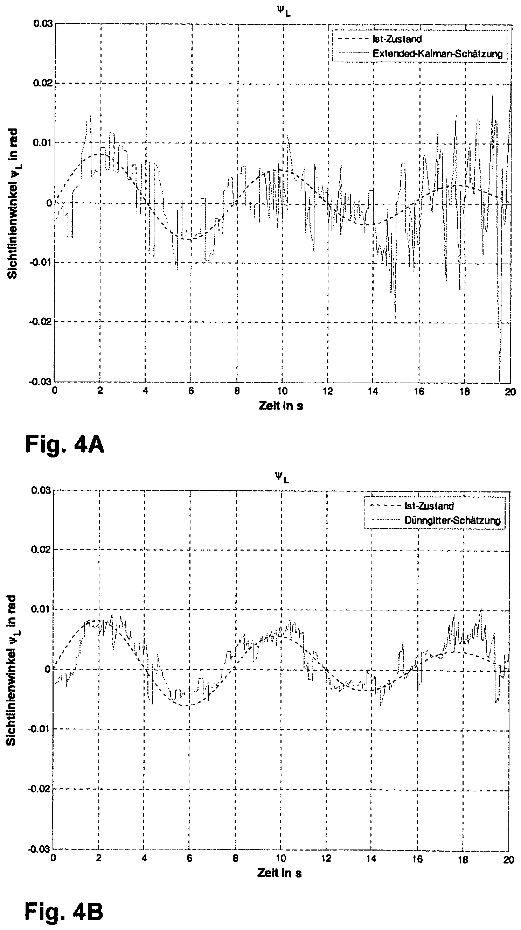

In Abbildung 4a ist die Vorhersage des Azimuth-Elevationswinkels durch einen Extended-Kalman-Filter im Vergleich zum wahren Wert zu sehen.

In Abbildung 4b ist die Vorhersage des Azimuth-Elevationswinkels durch die das erfindungsgemäße Verfahren anwendende neue Dünngitter-Schätzung im Vergleich zum wahren Wert zu sehen.

Es ist ersichtlich, dass das Ergebnis der Vorhersage mit dem erfindungsgemäßen Verfahren in Fig. 4b deutlich näher an der Kurve des Ist-Zustandes liegt, als die Vorhersage mittels des Extended-Kalman-Filters gemäß Fig. 4a, und somit wesentlich genauer ist.

Die Erfindung befasst sich in der Praxis zum Beispiel mit einer Vorrichtung und einem Verfahren zur Vorhersage von Bewegungen von Objekten mittels Radarmessungen mit Hilfe von dünnen Gittern, wobei die zu lösende stochachstische partielle Differentialgleichung auf dünnen Gittern (Standard-Gittern oder dimensions-adaptierten Gittern oder lokal verfeinerten Gittern) diskretisiert und gelöst wird.

Ein weiteres Beispiel der Erfindung betrifft eine Vorrichtung und ein Verfahren zur Vorhersage von Bewegungen von Objekten mittels Radarmessungen mit Hilfe von dünnen Gittern, wobei die interessierenden Vorhersagewerte der Bewegung aus der auf dünnen Gittern approximierten Dichtefunktion berechnet werden.

Ein anderes Beispiel der Erfindung betrifft eine Vorrichtung und ein Verfahren zur Vorhersage von Bewegungen von Objekten mittels Radarmessungen mit Hilfe von dünnen Gittern, wobei die Dichtefunktion lokal auf einer "Kachelung" von Dünngittereinheiten bildenden dünnen Gittern approximiert wird und sich diese, ein Dünngittergebiet bildende, Aneinanderreihung einzelner, dünner Gitter entsprechend der Bewegung der relevanten Bereiche zeitlich verändern kann.

Schließlich besteht eine vorteilhafte Ausbildung der Erfindung in einer Vorrichtung und einem Verfahren zur Vorhersage von Bewegungen von Objekten mittels Radarmessungen mit Hilfe von dünnen Gittern, wobei die einzelnen Berechnungsschritte auf dünnen Gittern parallel verarbeitet werden.

Bezugszeichen in den Ansprüchen, der Beschreibung und den Zeichnungen dienen lediglich dem besseren Verständnis der Erfindung und sollen den Schutzumfang nicht einschränken.

**Bezugszeichenliste**

Es bezeichnen:

| | |
|---|---|
| 1 | Rechnereinrichtung |
| 2 | Speicher |
| 10 | Dünngittergebiet |
| 11 | Dünngittereinheit |
| 12 | Dünngittereinheit |
| 13 | Dünngittereinheit |
| 14 | Dünngittereinheit |
| 15 | Dünngittereinheit |
| 16 | Dünngittereinheit |
| 17 | Dünngittereinheit |
| 18 | Dünngittereinheit |
| 21 | Gitter-Ergänzungsstelle |
| 22 | Gitter-Ergänzungsstelle |
| 23 | Gitter-Ergänzungsstelle |
| 24 | Gitter-Ergänzungsstelle |
| 25 | Gitter-Ergänzungsstelle |
| 26 | Gitter-Ergänzungsstelle |
| 27 | Gitter-Ergänzungsstelle |
| 31 | Gitter-Ergänzungsstelle |
| 32 | Gitter-Ergänzungsstelle |
| 33 | Gitter-Ergänzungsstelle |
| 34 | Gitter-Ergänzungsstelle |

**Patentansprüche**

1. Verfahren zur Verfolgung der Bewegungsbahn eines sich bewegenden Objekts mit den folgenden Schritten:

   a) Bereitstellung von Daten von zumindest einer die Bewegung beeinflussenden, zu bestimmenden Zustandsgröße des sich bewegenden Objekts zu einem ersten Zeitpunkt;
   b) Initialisierung der Wahrscheinlichkeitsdichte (p) der zumindest einen zu bestimmenden Zustandsgröße zum ersten Zeitpunkt;
   c) Prädiktion der Wahrscheinlichkeitsdichte (p) der zumindest einen zu bestimmenden Zustandsgröße zu einem nach dem ersten Zeitpunkt gelegenen nächsten Zeitpunkt;
   d) Überprüfen, ob Messdaten vorliegen, die zu einer Berechnung der Wahrscheinlichkeitsdichte (p) der zumindest einen zu bestimmenden Zustandsgröße herangezogen werden können, und,
   d') falls derartige Messdaten vorliegen, Neuberechnung der Wahrscheinlichkeitsdichte (p) mit diesen Messdaten;
   e) Berechnen der Vorhersagewerte der zu bestimmenden Zustandgröße(n) aus der Wahrscheinlichkeitsdichte (p);
   f) Ausgabe der berechneten Vorhersagewerte an eine nachgeordnete Datenverarbeitungseinrichtung;
   g) Wiederholen der Schritte c) bis f);

**dadurch gekennzeichnet,**
**dass** die Schritte

- der Initialisierung der Wahrscheinlichkeitsdichte Schritt b),
- der Prädiktion der Wahrscheinlichkeitsdichte Schritt c),
- der Neuberechnung der Wahrscheinlichkeitsdichte Schritt d') und
- der Berechnung der Vorhersagewerte Schritt e) durch Diskretisierung der Wahrscheinlichkeitsdichte (p) auf dünnen Gittern durchgeführt werden.

2. Verfahren nach Anspruch 1,
   **dadurch gekennzeichnet,**
   **dass** die dünnen Gitter dimensions-adaptiert sind.

3. Verfahren nach Anspruch 1 oder 2,
   **dadurch gekennzeichnet,**
   **dass** die dünnen Gitter lokal verfeinert sind.

4. Verfahren nach einem der vorhergehenden Ansprüche,
   **dadurch gekennzeichnet,**
   **dass** die Diskretisierung der Wahrscheinlichkeitsdichten auf dünnen Gittern für die einzelnen Gitterstellen sequentiell durchgeführt wird.

5. Verfahren nach Anspruch 1 bis 3,
   **dadurch gekennzeichnet,**
   **dass** die Diskretisierung der Wahrscheinlichkeitsdichten auf dünnen Gittern für die einzelnen Gitterstellen parallel durchführt wird.

6. Verfahren nach einem der vorhergehenden Ansprüche,
   **dadurch gekennzeichnet,**
   **dass** im Schritt b) vor der ersten Diskretisierung der Wahrscheinlichkeitsdichte Daten bereitgestellt werden, die die Anzahl der Gitterstellen und die Abstände zwischen den Gitterstellen für jede Dimension des dünnen Gitters definieren und so eine Dünngittereinheit bestimmen und dass ein zumindest eine Dünngittereinheit aufweisendes Dünngittergebiet definiert wird.

7. Verfahren nach Anspruch 6,
   **dadurch gekennzeichnet,**

   - **dass** vor Schritt c), vorzugsweise im Schritt b), die Definition einer von der Wahrscheinlichkeitsdichte abhängigen ersten Entscheidungsgröße erfolgt und
   - **dass** nach dem Schritt e) die folgenden Schritte durchgeführt werden:

     e1) Überprüfen, ob die erste Entscheidungsgröße auf einer Dünngittereinheit unter einem vorgegebenen Schwellenwert liegt und
     e2) falls dies der Fall ist, Entfernen der überprüften Dünngittereinheit aus dem Dünngittergebiet.

8. Verfahren nach einem der vorhergehenden Ansprüche,
   **dadurch gekennzeichnet,**

   - **dass** vor Schritt c), vorzugsweise im Schritt b), die Definition einer von der Wahrscheinlichkeitsdichte abhängigen zweiten Entscheidungsgröße erfolgt und
   - **dass** nach dem Schritt e) beziehungsweise Schritt e2) die folgenden Schritte durchgeführt werden:

     e3) Überprüfen, ob die zweite Entscheidungsgröße in einem vorgegebenen Abstand zu einem Rand des Dünngittergebiets über einem vorgegebenen Schwellenwert liegt und
     e4) falls dies der Fall ist, Erweitern des Dünngittergebiets um zumindest eine Dünngittereinheit angrenzend an den betreffenden Rand des Dünngittergebiets.

9. Verfahren nach einem der vorhergehenden Ansprüche,

**dadurch gekennzeichnet,**
**dass** die im Schritt a) bereitgestellten Daten durch Messung oder durch Schätzung ermittelt werden.

10. Computerprogrammprodukt mit einem Computerprogramm zur Verfolgung der Bewegungsbahn eines sich bewegenden Objekts, in dem das Verfahren gemäß einem der vorhergehenden Ansprüche implementiert ist.

11. Datenträger, auf dem ein Computerprogrammprodukt nach Anspruch 10 gespeichert ist.

12. Vorrichtung zur Ortung und Verfolgung von bewegten Objekten, insbesondere von Flugkörpern, wobei die Vorrichtung oder ein Element der Vorrichtung ein Verfahren gemäß einem der Ansprüche 1 bis 9 verwendet.

**Claims**

1. Method for tracking the trajectory of a moving object, comprising the following steps:

   a) providing data of at least one state variable, which influences the movement and is to be determined, of the moving object at a first time;
   b) initialising the probability density (p) of the at least one state variable to be determined at the first time;
   c) predicting the probability density (p) of the at least one state variable to be determined at a following time subsequent to the first time;
   d) checking whether there are measurement data which can be used for calculating the probability density (p) of the at least one state variable to be determined, and
   d') if there are measurement data of this type, recalculating the probability density (p) using these measurement data;
   e) calculating the predicted values of the state variable(s) to be determined from the probability density (p);
   f) outputting the calculated predicted values to a superordinate data processing means;
   g) repeating steps c) to f)

   **characterised**
   **in that** the steps of

   - initialising the probability density / step b),
   - predicting the probability density / step c),
   - recalculating the probability density / step d) and
   - calculating the predicted values / step e) are carried out by discretising the probability density (p) on sparse grids.

2. Method according to claim 1,
   **characterised**
   **in that** the sparse grids are dimensionally adapted.

3. Method according to either claim 1 or claim 2,
   **characterised**
   **in that** the sparse grids are locally refined.

4. Method according to any of the preceding claims,
   **characterised**
   **in that** the discretisation of the probability densities is carried out on sparse grids sequentially for the individual grid points.

5. Method according to claim 1 to 3,
   **characterised**
   **in that** the discretisation of the probability densities is carried out on sparse grids in parallel for the individual grid points.

6. Method according to any of the preceding claims,
   **characterised**
   **in that** in step b), prior to the first discretisation of the probability density, data are provided which define the number of grid points and the distances between the grid points for each dimension of the sparse grid, and thus determine a sparse grid unit, and in that a sparse grid region comprising at least one sparse grid unit is defined.

7. 7. Method according to claim 6,
**characterised**

- **in that** prior to step c), preferably in step b), a first decision variable dependent on the probability density is defined, and
- **in that** after step e) the following steps are carried out:

e1) checking whether the first decision variable is below a predetermined threshold on a sparse grid unit, and
e2) if so, removing the checked sparse grid unit from the spare grid region.

8. 8. Method according to any of the preceding claims,
**characterised**

- **in that** prior to step c), preferably in step b), a second decision variable dependent on the probability density is defined, and
- **in that** after step e) or step e2) the following steps are carried out:

e3) checking whether the second decision variable is above a predetermined threshold at a predetermined distance from an edge of the sparse grid region, and
e4) if so, extending the sparse grid region by at least one sparse grid unit adjacent to the relevant edge of the sparse grid region.

9. Method according to any of the preceding claims,
**characterised**
**in that** the data provided in step a) are determined by measurement or by evaluation.

10. Computer program product comprising a computer program for tracking the trajectory of a moving object, in which the method is implemented in accordance with one of the preceding claims.

11. Data carrier on which a computer program product according to claim 10 is stored.

12. Device for locating and tracking moving objects, in particular missiles, the device or an element of the device using a method according to one of claims 1 to 9.

**Revendications**

1. Procédé de poursuite de la trajectoire d'un objet en mouvement, comprenant les étapes suivantes :

a) fourniture de données d'au moins un paramètre d'état à déterminer, influençant le mouvement, de l'objet en mouvement à un premier moment ;
b) initialisation de la densité de probabilité (p) de l'au moins un paramètre d'état à déterminer au premier moment ;
c) prédiction de la densité de probabilité (p) de l'au moins un paramètre à déterminer à un moment suivant situé après le premier moment ;
d) vérification si des données de mesure sont présentes, lesquelles peuvent être prises en considération pour un calcul de la densité de probabilité (p) de l'au moins un paramètre d'état à déterminer, et
d') au cas de telles données de mesure soient présentes, nouveau calcul de la densité de probabilité (p) à l'aide de ces données de mesure ;
e) calcul, à partir de la densité de probabilité (p), des valeurs de prédiction du (des) un paramètre(s) d'état à déterminer ;
f) sortie, à un dispositif subordonné de traitement de données, des valeurs de prédiction calculées ;
g) répétition des étapes c) à f) ;

**caractérisé en ce**
**que** les étapes

- de l'initialisation de la densité de probabilité étape b),
- de la prédiction de la densité de probabilité étape c),
- du nouveau calcul de la densité de probabilité étape d') et
- du calcul des valeurs de prédiction étape e),

sont réalisées par discrétisation de la densité de probabilité (p) sur des grilles éparses.

2. Procédé selon la revendication 1,
   **caractérisé en ce**
   **que** les grilles éparses sont adaptées aux dimensions.

3. Procédé selon la revendication 1 ou 2,
   caractérisé en ce
   les grilles éparses sont localement affinées.

4. Procédé selon l'une quelconque des revendications précédentes,
   caractérisé en ce
   la discrétisation des densités de probabilité sur des grilles éparses est réalisée de manière séquentielle pour les points de grilles individuels.

5. Procédé selon la revendication 1 à 3,
   **caractérisé en ce**
   **que** la discrétisation des densités de probabilité sur des grilles éparses est réalisée de manière parallèle pour les points de grilles individuels.

6. Procédé selon l'une quelconque des revendications précédentes,
   **caractérisé en ce**
   **qu'**à l'étape b), avant la première discrétisation de la densité de probabilité, des données sont fournies, lesquelles définissent le nombre de points de grilles et les écarts entre les points de grilles pour chaque dimension de la grille éparse et déterminent ainsi une unité de grille éparse, et en ce qu'au moins une région de grille éparse présentant une unité de grille éparse est définie.

7. Procédé selon la revendication 6,
   **caractérisé en ce**

   - **qu'**avant l'étape c), de préférence à l'étape b), la définition d'une première grandeur de décision dépendant de la densité de probabilité est réalisée, et
   - en ce qu'après l'étape e), les étapes suivantes sont réalisées :

     e1) vérification si la première grandeur de décision sur une unité de grille éparse est située en dessous d'une valeur de seuil prédéfinie, et
     e2) si c'est le cas, retrait hors de la région de grille éparse de l'unité de grille éparse vérifiée.

8. Procédé selon l'une quelconque des revendications précédentes,
   **caractérisé en ce**

   - **qu'**avant l'étape c), de préférence à l'étape b), la définition d'une deuxième grandeur de décision dépendant de la densité de probabilité est réalisée, et
   - en ce qu'après l'étape e) ou l'étape e2), les étapes suivantes sont réalisées :

     e3) vérification si la deuxième grandeur de décision est située au-delà d'une valeur de seuil prédéfinie dans un écart prédéfini par rapport à un bord de la région de grille éparse, et
     e4) si c'est le cas, élargissement de la région de grille éparse d'au moins une unité de grille éparse adjacente au bord concerné de la région de grille éparse.

9. Procédé selon l'une quelconque des revendications précédentes,
   **caractérisé en ce**
   **que** les données fournies à l'étape a) sont déterminées par mesure ou estimation.

**10.** Produit de programme informatique comportant un programme informatique pour la poursuite de la trajectoire d'un objet en mouvement, dans lequel le procédé selon l'une quelconque des revendications précédentes est mis en oeuvre.

**11.** Support de données sur lequel un produit de programme informatique selon la revendication 10 est mémorisé.

**12.** Dispositif de localisation et de poursuite d'objets en mouvement, notamment de missiles, le dispositif ou un élément du dispositif utilisant le procédé selon l'une quelconque des revendications 1 à 9.

**Fig. 1**

Eingabe

1

Initialisierung

Speicher

Für alle Zeitpunkte

Diskretisiere Differentialgleichung und löse

Berechne die Vorhersagewerte

Passe falls nötig das diskrete Gebiet an

2

Ausgabe

**Fig. 2**

**Fig. 3**

Fig. 4A

Fig. 4B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10062120 A1

**In der Beschreibung aufgeführte Nicht-Patentliteratur**

- **ZHANG, H. ; LANEUVILLE, D.** Grid Based Solution of Zakai Equation with Adaptive Local Refinement for Bearings-only Tracking. *IEEE Aerospace Conference,* 2008, 1-8
- **ZHANG, H. ; LANEUVILLE, D.** Grid Based Solution of Zakai Equation with Adaptive Local Refinement for Bearings-only Tracking. *IEEE Aerospace Conference,* 2008, 1-8
- Parallel Algorithms for Partial Differential Equations. Braunschweig: Vieweg. **ZENGER, C. ; SPARSE GRIDS.** Notes on Numerical Fluid Mechanics. 1991, vol. 31, 241-251
- **ZHANG, H. ; LANEUVILLE, D.** Approximation of Zakai equation by grid based method. *Vortragsfolien, Workshop on Multi-target tracking,* 13. Mai 2009, http://www.math.u-bordeaux.fr/~fcaron/Docs/mtt-workshop-zhang.pdf